# FASCICULE DE BREVET EUROPEEN

(11) **EP 2 200 820 B1**
(45) Date de publication et mention de la délivrance du brevet: **13.06.2018**
(21) Numéro de dépôt: 08840496.7
(22) Date de dépôt: 15.10.2008
(51) Int. Cl.: B32B 17/10, C03C 27/12, H05B 3/86, C03C 17/36, C03C 17/23, F21K 9/00

(54) **VITRAGE FEUILLETÉ CONDUCTEUR À STABILITÉ AMÉLIORÉE**
LEITFÄHIGE VERBUNDGLASSCHEIBE MIT ERHÖHTER STABILITÄT
CONDUCTIVE LAMINATED GLAZING HAVING IMPROVED STABILITY

(30) Priorité: 16.10.2007 EP 07118610
(43) Date de publication de la demande: 30.06.2010
(73) Titulaire: AGC Glass Europe, 1348 Louvain-la-Neuve (BE)
(72) Inventeur: LUIJKX, Antoine, B-6040 Jumet (BE); DEMEYERE, Michaël, B-6040 Jumet (BE); BOULANGER, Pierre, 6040 Jumet (BE)
(74) Mandataire: Bayot, Daisy
(86) Numéro de dépôt international: PCT/EP2008/063862
(87) Numéro de publication internationale: WO 2009/050195

(56) Documents cités:
- EP-A- 0 728 712
- FR-A- 2 008 001
- FR-A- 2 279 687
- FR-A- 2 892 594
- JP-A- 6 256 043
- US-A- 5 427 861
- US-A1- 2002 150 764
- US-A1- 2005 208 315
- US-A1- 2007 178 314

## Description

La présente invention se rapporte aux vitrages feuilletés, spécialement aux vitrages feuilletés conducteurs de l'électricité.

L'invention concerne un vitrage feuilleté conducteur de l'électricité qui présente une stabilité améliorée au passage du courant électrique.

Les vitrages feuilletés sont communément utilisés dans l'industrie du transport pour la fabrication des pare-brise de voitures automobiles et des vitrages ferroviaires, aériens et maritimes. Ils sont également utilisés dans l'industrie du bâtiment pour la fabrication de vitrages de sécurité tels que, par exemple, les verrières et les garde-fous de balcons et de terrasses.

Ils sont généralement constitués d'une ou plusieurs feuilles de verre minéral ou organique collée(s) sur au moins une feuille en matériau thermoplastique adhésif.

Des vitrages feuilletés conducteurs de l'électricité sont connus par le document WO 2006/010698 A1 de GLAVERBEL, dans lequel il est divulgué la présence de pistes conductrices transparentes permettant de chauffer le vitrage, par exemple pour des applications dans le domaine automobile.

Dans le document WO 2004/062908 A2 de GLAVERBEL, il est aussi divulgué un vitrage feuilleté conducteur de l'électricité dans lequel ont été incorporés des composants électroniques, notamment des diodes électroluminescentes. Dans ce vitrage, le circuit électroconducteur peut comprendre des bandes formées d'une couche électroconductrice transparente qui recouvre une feuille de verre, à l'interface de celle-ci avec la feuille en matériau thermoplastique.

Le passage prolongé du courant électrique dans les bandes et les pistes conductrices en contact avec une feuille en matériau thermoplastique peut cependant avoir les inconvénients de faire apparaître des zones plus ou moins colorées qui viennent diminuer localement la transparence du vitrage et former des taches préjudiciables à son utilisation. Le phénomène est plus prononcé en courant continu.

L'invention remédie à ces inconvénients en fournissant un vitrage feuilleté conducteur de l'électricité à stabilité améliorée qui garde sa transparence au passage du courant électrique tout au long de périodes d'utilisation prolongée, même en alimentation avec un courant continu ("DC").

A cet effet, l'invention concerne un nouveau vitrage feuilleté conducteur de l'électricité tel que défini dans la revendication 1.

Les revendications dépendantes définissent d'autres formes possibles de réalisation de l'invention, dont certaines sont préférées.

Le nouveau vitrage conforme à l'invention possède une stabilité améliorée comparée aux verres feuilletés conducteurs de l'électricité connus. Par stabilité on entend désigner une constance de ses propriétés physiques et chimiques, après passage du courant électrique pendant une durée plus ou moins prolongée dans les conditions normales d'utilisation. Au bout de cette période prolongée d'utilisation, le vitrage conforme à l'invention garde ses propriétés physiques et chimiques à un niveau comparable à celui d'un vitrage du même type, nouvellement fabriqué. Par propriétés physiques, on entend principalement, mais pas uniquement, les propriétés optiques comme, par exemple, la transmission et l'absorption lumineuses ainsi que la couleur en transmission dans le spectre de la lumière visible.

Le vitrage feuilleté conforme à l'invention comprend au moins une feuille de verre rigide. Par feuille de verre, on entend désigner toute plaque de verre minéral ou organique d'épaisseur pouvant varier entre 1 et 50 mm. L'épaisseur peut ne pas être constante en différents points de la surface de la feuille. La surface peut être plane ou courbe. On préfère cependant des feuilles de verre planes d'épaisseur constante en tout point de la surface.

Le verre minéral peut être constitué indifféremment d'un ou plusieurs types de verres connus comme les verres sodo-calcique, les verres au bore, les verres cristallins et semi-cristallins. Le verre organique peut être un polymère ou un copolymère transparent thermodur ou thermoplastique rigide tel que, par exemple, une résine de synthèse polycarbonate, polyester ou polyvinylique transparente.

On préfère les verres minéraux ou organiques de type clairs ou très légèrement colorés de manière homogène dans la masse ou dans une zone mince proche d'une surface extérieure du verre. Les verres minéraux de type sodo-calcique conviennent particulièrement bien, tels que ceux qui comprennent les composants de base suivants (pourcentages en poids) :

| | |
|---|---|
| SiO₂ | 60 à 75 % |
| Na₂O | 10 à 20 % |
| CaO | 2 à 16 % |
| K₂O | 0 à 10 % |
| MgO | 0 à 10 % |
| Al₂O₃ | 0 à 5 % |
| BaO | 0 à 2 % |
| BaO + CaO + MgO | 10 à 20 % |
| K₂O + Na₂O | 10 à 20 %. |

La feuille de verre du vitrage conforme à l'invention est une feuille rigide, c'est-à-dire de résistance mécanique aux sollicitations de flexion et de torsion suffisante pour ne pas se déformer sous l'action de sollicitations extérieures que l'on rencontre couramment dans le milieu ambiant dans lequel on utilise généralement le vitrage.

Le vitrage selon l'invention comprend aussi au moins une feuille d'un matériau thermoplastique. Par matériau thermoplastique, on entend ici un matériau qui peut se déformer à volonté sous l'action de la chaleur et qui retrouve sa rigidité au refroidissement. Dans le vitrage conforme à l'invention au moins une feuille de matériau thermoplastique est collée sur au moins une feuille de verre rigide.

Le matériau de la feuille thermoplastique est sélectionné parmi les matériaux aptes à se coller sur une surface de verre. On utilise généralement des polyvinylbutyrals ("PVB").

Selon l'invention, le matériau de la feuille thermoplastique du vitrage feuilleté ne doit pas contenir plus de 30 ppm en poids de cations de métaux monovalents (somme des teneurs des cations monovalents ≤ 30 ppm poids). Ces cations sont généralement présents à titre d'impuretés résiduelles découlant du processus de fabrication des matériaux thermoplastiques. Comme cations monovalents, on rencontre le plus fréquemment les cations alcalins, tels que, par exemple, le Na⁺ et/ou le K⁺.

De manière préférée, on sélectionne un matériau de feuille thermoplastique qui ne comprend pas plus de 10 ppm en poids de cations monovalents de métaux alcalins. Les matériaux de feuille thermoplastique les plus préférés sont ceux dans lesquels cette teneur en cations monovalents n'est pas supérieure à 8 ppm en poids.

Les polyvinylbutyrals sont ceux dans lesquels il subsiste au moins 25 % en poids de fonctions carboxyle et hydroxyle libres.

Selon l'invention, on sélectionne un matériau de la feuille thermoplastique qui, ne comprend pas moins de 30 ppm en poids de cations divalents. De préférence, le matériau de la feuille thermoplastique ne comprend pas moins de 40 ppm en poids de cations divalents. Les matériaux de feuille thermoplastique les plus préférés sont ceux qui ne comprennent pas moins de 70 ppm de cations divalents. Comme cations divalents, on rencontre le plus fréquemment les cations alcalino-terreux, tels que, par exemple, le Ca⁺⁺ et/ou le Mg⁺⁺. Le matériau de la feuille thermoplastique du vitrage conforme à l'invention ne comprend pas plus de 30 ppm en poids de cations monovalents et, dans le même temps, pas moins de 30 ppm en poids de cations divalents.

Le vitrage feuilleté conforme à l'invention comprend aussi des pistes d'alimentation électrique. Celles-ci ont généralement la forme de bandes de film transparent conducteur de l'électricité. Elles peuvent être déposées sur une surface interne au vitrage d'au moins une feuille de verre. Lorsque le vitrage comprend, par exemple, plus de deux feuilles de verre et au moins deux feuilles de matériau thermoplastique prises en sandwich entre les feuilles de verre, les pistes peuvent être déposées sur plus d'une face interne au vitrage de feuilles de verre.

Alternativement, les pistes d'alimentation électrique formées de bandes de film transparent conducteur de l'électricité peuvent aussi être déposées sur au moins une face d'une feuille de matériau thermoplastique.

Le vitrage conforme à l'invention peut aussi comprendre, à la fois des pistes d'alimentation électrique formées de bandes de film transparent conducteur de l'électricité déposées sur une surface interne au vitrage d'au moins une feuille de verre et d'autres bandes de film transparent conducteur de l'électricité déposées sur au moins une face d'une feuille de matériau thermoplastique. Dans cette dernière éventualité, l'ordre de l'empilage individuel des feuille(s) de verre, bande(s) de film conducteur et feuille(s) de matériau thermoplastique est indifférent.

Une forme de réalisation du vitrage conforme à l'invention est celle dans laquelle le vitrage est un vitrage chauffant où les pistes d'alimentation électrique ont une résistance électrique adaptée à la nature, l'épaisseur et la largeur des pistes pour produire de la chaleur par effet Joule lorsque les pistes du vitrage sont connectées à une source de courant électrique. Cette forme de réalisation se rencontre par exemple dans les mobiles de l'industrie du transport, pour des applications de désembuage et/ou de dégivrage des panneaux vitrés des mobiles. Une application automobile pour le désembuage/dégivrage du verre de la fenêtre de custode est un exemple type de l'utilisation d'un tel vitrage.

Une autre forme de réalisation du vitrage conforme à l'invention est celle dans laquelle le vitrage est un vitrage lumineux ou un vitrage éclairant, des composants électroniques luminescents étant incorporés dans la feuille thermoplastique. De tels composants électroniques luminescents sont, par exemple, des diodes électroluminescentes (LEDs), y compris les diodes électroluminescentes organiques (OLEDs). Dans cette forme de réalisation, les LEDs ont donné d'excellents résultats. Des exemples de vitrages lumineux sont, entre autres, des vitrages décoratifs, des vitrages colorés d'ambiance et des vitrages affichant des informations.

Dans une troisième forme de réalisation du vitrage conforme à l'invention, celui-ci peut aussi être un vitrage comprenant des composants électroniques qui ne soient pas des diodes électroluminescentes comme, par exemple, d'autres types de composants en rapport avec l'aspect optique du vitrage tels que les photorésistances, les photodiodes et les capteurs de vision. D'autres composants électroniques tels que des composants MEMS (micro-systèmes électromécaniques, ou "Micro Electro Mechanical Systems" pour les anglo-saxons) et des circuits intégrés plus traditionnels tels que des microprocesseurs ainsi que des composants électroniques passifs peuvent aussi être incorporés aux vitrages conformes à l'invention, afin de réaliser des systèmes électroniques complets.

Dans tous les types de vitrages selon l'invention listés ci-avant, le film transparent conducteur de l'électricité peut être de nature diverse.

Un premier mode de réalisation de ce film est celui de couches minces de dioxyde d'étain dopé au fluor et/ou à l'antimoine ou encore les couches minces d'oxyde d'indium mélangé à du dioxyde d'étain. Un revêtement d'un tel film conducteur transparent peut, par exemple, avoir été déposé sur au moins une feuille de verre par la technique bien connue de dépôt chimique en phase vapeur (CVD), à partir de précurseurs en phase gazeuse.

Un deuxième mode de réalisation du film transparent conducteur de l'électricité est celui où le film est formé d'un empilage de couches comprenant au moins une couche d'un métal conducteur de l'électricité tel que l'aluminium ou l'argent. De tels empilages sont par exemple le résultat d'une succession de dépôts par pulvérisation cathodique magnétron sous vide ("magnetron sputtering" dans la littérature anglo-saxonne). L'empilage de couches est, par exemple dans ce cas :

TiO₂ / ZnO / Ag / Ti / ZnO / SnO₂

L'invention est illustrée de manière plus détaillée dans les exemples qui suivent

### Exemples

### 1. Réalisation d'éprouvettes

Des éprouvettes de vitrages feuilletés conducteurs ont été réalisées avec des feuilles en matériaux thermoplastiques constituée de polyvinylbutyrals ("PVB"s) de diverses provenances et des feuilles de verres identiques. Ils ont été obtenus de la manière suivante :
Dans une feuille de verre commercial d'AGC Flat Glass Europe de marque PLANIBEL® G, constituée d'un verre sodo-calcique de 4 mm d'épaisseur revêtu d'un empilage de couches minces transparentes pyrolytiques formé d'une sous-couche en oxy-carbure de silicium et d'une couche conductrice de l'électricité en oxyde d'étain dopé au fluor d'environ 15 Ω/□ de résistance superficielle, on a découpé un échantillon carré de 10 cm de côté. On a tracé ensuite sur la couche au milieu du carré un sillon rectiligne s'étendant entre deux côtés opposés au moyen d'un laser infrarouge à fibre qui a enlevé totalement l'empilage des couches minces recouvrant le verre sur une largeur d'environ 100 µm. On a alors collé, à titre de connecteur électrique, sur les bords de la couche transparente conductrice de chacune des deux moitiés d'échantillon un ruban de cuivre au moyen d'un adhésif conducteur. On est venu ensuite appliquer sur l'échantillon de verre, du côté de la couche conductrice, une feuille intercalaire en PVB à tester de même dimension que l'échantillon carré de verre conducteur et d'épaisseur déterminée (choisie parmi la gamme allant de 1,3 à 1,7 mm). On a ensuite appliqué sur la feuille de PVB recouvrant l'échantillon en verre une deuxième feuille de verre sodo-calcique clair de 4 mm d'épaisseur et de même dimension que cet échantillon et que la feuille de PVB.

L'empilage des feuilles de verre, couche conductrice et feuille de PVB intercalaire duquel débordent les deux rubans connecteurs en cuivre a ensuite fait l'objet d'un laminage dans les conditions de pressage et d'autoclavage sous-vide habituelles de manière à réaliser un vitrage feuilleté à deux feuilles de verre emprisonnant deux pistes conductrices, exempt de bulles d'air.

### 2. Test accéléré de comportement des PVB laminés

Les vitrages réalisés avec les différents PVB à tester ont ensuite été connectés en permanence à une source de tension électrique continue de 20V et placés sous cette tension dans une étuve chauffée de température réglée à 80°C. Un examen visuel du vitrage a été effectué à intervalles de temps réguliers, afin de déterminer le délai au bout duquel apparaissent les premières taches colorées au voisinage du sillon tracé au laser dans le milieu de la couche conductrice d'une des feuilles de verre du vitrage feuilleté.

### 3. Comparaison des performances de PVB différents

Dans le tableau qui suit, on a porté le temps d'apparition mesuré des colorations dans le voisinage du sillon des couches conductrices d'échantillons de vitrages feuilletés obtenus selon la méthode décrite au point 1 qui précède, avec des PVB d'origine différente.

Les résultats des analyses chimiques des PVB utilisés ont aussi été portés dans le même tableau, à savoir : teneurs en Na⁺, K⁺, Ca⁺⁺, Mg⁺⁺ et pourcentages en poids des fonctions butyle et de la somme des fonctions acétate et hydroxyle libres.

On peut voir que le vitrage fabriqué avec un PVB de Solutia Salflex® RE 41 clear n'est pas conforme aux vitrages selon l'invention (Na⁺ + K⁺ > 30 ppm poids) et donne lieu à l'apparition de colorations après déjà 24 heures sous 20 V, 80 °C.

Les PVB de Sekisui testés conduisent à des vitrages conformes à l'invention et permettent des durées de fonctionnement sans colorations intempestives pour des périodes nettement plus longues.

| **Fabricant PVB** | **Nom (/type) PVB** | **Teneurs en ions, ppm poids** | | | | **Plastifiants** | | **Fonctions, % poids** | | **Délai apparition colorations** |
|---|---|---|---|---|---|---|---|---|---|---|
| | | **Na⁺** | **K⁺** | **Ca+** | **Mg⁺⁺** | **% extractible** | **Tg, °C** | **hydroxyle + acétate** | **butyle** | **heures, 20 V, 80°C** |
| **Solutia** | Saflex RE 41 clear | 2,6 | *48*,*0* | *2*,*9* | *24,0* | 27,8 | 16,6 | *11,7* | 88,3 | *24,0* |
| | RZV 12 | 2,5 | 0,6 | 2,8 | 72,5 | 27,8 | 22,8 | 26,9 | 73,1 | 449,0 |
| **Sekisui** | RZN 14 | 1,9 | 0,8 | 3,3 | 68,5 | 27,7 | 24,0 | 29,1 | 70,9 | 300,0 |
| | RZN 12 | 1,3 | 0,6 | 3,1 | 72,0 | 27,7 | 18,9 | 39,0 | 61,0 | 176,0 |

## Revendications

1. Vitrage feuilleté conducteur de l'électricité à stabilité améliorée comprenant au moins une feuille de verre minéral ou organique rigide et au moins une feuille d'un matériau thermoplastique collé à la feuille rigide, le vitrage comprenant aussi des pistes d'alimentation électrique ayant la forme de bandes de film transparent conducteur de l'électricité, **caractérisé en ce que** le matériau de la feuille thermoplastique est un polyvinylbutyral sélectionné parmi ceux dont la teneur en cations de métaux monovalents n'est pas supérieure à 30 ppm en poids, **en ce que** le polyvinylbutyral comprend au moins 25 % en poids de fonctions carboxyle et hydroxyle libres et **en ce que** le polyvinylbutyral ne comprend pas moins de 30 ppm en poids de cations divalents de métaux alcalino-terreux.

2. Vitrage selon la revendication précédente, **caractérisé en ce que** les pistes d'alimentation électrique sont déposées sur une surface interne au vitrage d'au moins une feuille de verre.

3. Vitrage selon la revendication 1, **caractérisé en ce que** les pistes d'alimentation électrique sont déposées sur au moins une face d'une feuille thermoplastique.

4. Vitrage selon une quelconque des revendications précédentes, **caractérisé en ce que** le vitrage est un vitrage chauffant, les pistes d'alimentation électrique présentant une résistance capable de produire de la chaleur par effet Joule.

5. Vitrage selon une quelconque des revendications précédentes, **caractérisé en ce que** le vitrage est un vitrage qui comprend des composants électroniques sous la forme de diodes électroluminescentes étant incorporés dans la feuille thermoplastique.

6. Vitrage selon la revendication précédente, **caractérisé en ce qu'**il est un vitrage lumineux décoratif.

7. Vitrage selon une quelconque des revendications précédentes, **caractérisé en ce que** Le film transparent conducteur de l'électricité est sélectionné parmi les couches minces de dioxyde d'étain dopé au fluor et/ou à l'antimoine et les couches minces d'oxyde d'indium mélangé à du dioxyde d'étain.

8. Vitrage selon une quelconque des revendications 1 à 7, **caractérisé en ce que** le film transparent conducteur de l'électricité est un empilage de couches comprenant au moins une couche d'argent.

## Patentansprüche

1. Elektrisch leitfähige Verbundglasscheibe mit erhöhter Stabilität, welche wenigstens eine starre Scheibe aus Mineralglas oder organischem Glas und wenigstens eine Folie aus einem thermoplastischen Material, das auf die starre Scheibe geklebt ist, umfasst, wobei die Glasscheibe außerdem Stromversorgungsbahnen umfasst, welche die Form von Bändern eines elektrisch leitfähigen durchsichtigen Films aufweisen, **dadurch gekennzeichnet, dass** das Material der thermoplastischen Folie ein Polyvinylbutyral ist, das aus denjenigen ausgewählt ist, deren Gehalt an Kationen einwertiger Metalle nicht höher als 30 Gew.-ppm ist, dadurch, dass das Polyvinylbutyral wenigstens 25 Gew.-% freie Carboxyl- und Hydroxylgruppen umfasst, und dadurch, dass das Polyvinylbutyral nicht weniger als 30 Gew.-ppm zweiwertige Kationen von Erdalkalimetallen umfasst.

2. Verbundglasscheibe nach dem vorhergehenden Anspruch, **dadurch gekennzeichnet, dass** die Stromversorgungsbahnen auf eine in der Verbundglasscheibe innen befindliche Fläche wenigstens einer Glasscheibe aufgebracht sind.

3. Verbundglasscheibe nach Anspruch 1, **dadurch gekennzeichnet, dass** die Stromversorgungsbahnen auf wenigstens eine Seite einer thermoplastischen Folie aufgebracht sind.

4. Verbundglasscheibe nach einem der vorhergehenden Ansprüche, **dadurch gekennzeichnet, dass** die Verbundglasscheibe eine beheizbare Verbundglasscheibe ist, wobei die Stromversorgungsbahnen einen Widerstand aufweisen, der in der Lage ist, durch Joule-Effekt Wärme zu erzeugen.

5. Verbundglasscheibe nach einem der vorhergehenden Ansprüche, **dadurch gekennzeichnet, dass** die Verbundglasscheibe eine Verbundglasscheibe ist, welche elektronische Bauteile in der Form von Leuchtdioden umfasst, die in die thermoplastische Folie integriert sind.

6. Verbundglasscheibe nach dem vorhergehenden Anspruch, **dadurch gekennzeichnet, dass** sie eine dekorative Leuchtglasscheibe ist.

7. Verbundglasscheibe nach einem der vorhergehenden Ansprüche, **dadurch gekennzeichnet, dass** der elektrisch leitfähige durchsichtige Film aus den dünnen Schichten aus mit Fluor und/oder mit Antimon dotiertem Zinndioxid und den dünnen Schichten aus mit Zinndioxid gemischtem Indiumoxid ausgewählt ist.

8. Verbundglasscheibe nach einem der Ansprüche 1 bis 7, **dadurch gekennzeichnet, dass** der elektrisch leitfähige durchsichtige Film ein Schichtenstapel ist, der wenigstens eine Silberschicht umfasst.

## Claims

1. Electrically conductive laminated glazing with improved stability comprising at least one rigid sheet of mineral or organic glass and at least one sheet of a thermoplastic material bonded to the rigid sheet, the glazing also comprising electrical supply tracks having the shape of strips of an electrically conductive transparent film, **characterized in that** the material of the thermoplastic sheet is a polyvinyl butyral selected from those for which the content of monovalent metal cations is no greater than 30 ppm by weight, and **in that** the polyvinyl butyral comprises at least 25% by weight of free carboxyl and hydroxyl functions and **in that** the polyvinyl butyral comprises no less than 30 ppm by weight of divalent cations of alkaline-earth metals.

2. Glazing according to the preceding claim, **characterized in that** the electrical supply tracks are deposited on a surface, internal to the glazing, of at least one glass sheet.

3. Glazing according to Claim 1, **characterized in that** the electrical supply tracks are deposited on at least one face of a thermoplastic sheet.

4. Glazing according to any one of the preceding claims, **characterized in that** the glazing is a heated glazing, the electrical supply tracks having a resistance capable of producing heat by the Joule effect.

5. Glazing according to any one of the preceding claims, **characterized in that** the glazing is a glazing that comprises electronic components in the form of light-emitting diodes being incorporated into the thermoplastic sheet.

6. Glazing according to the preceding claim, **characterized in that** it is a decorative luminous glazing.

7. Glazing according to any one of the preceding claims, **characterized in that** the electrically conductive transparent film is selected from thin layers of tin dioxide doped with fluorine and/or with antimony and thin layers of indium oxide mixed with tin dioxide.

8. Glazing according to any one of Claims 1 to 7, **characterized in that** the electrically conductive transparent film is a stack of layers comprising at least one silver layer.
